# EUROPEAN PATENT APPLICATION

(11) **EP 1 724 493 A2**
(43) Date of publication of application: **22.11.2006**
(21) Application number: 06075967.7
(22) Date of filing: 28.04.2006
(51) Int. Cl.: F16F 9/53

(54) **Magnetorheological piston assembly and damper**

(30) Priority: 17.05.2005 US 681796 P
(71) Applicant: Delphi Technologies, Inc., Troy, Michigan 48007 (US)
(72) Inventor: Kruckemeyer, William C., Beavercreek, OH 45434 (US); Han, Taeyoung, Bloomfield Hills, MI 48302 (US); Nehl, Thomas W., Shelby Township MI 48316 (US); Foister, Robert T., Rochester Hills, MI 48309 (US)
(74) Representative: Denton, Michael John

(57) **Abstract**

A magnetorheological (MR) piston assembly (110) includes an MR piston (112), a rod (114), and a guide member (116). The guide member includes an MR fluid passageway (124) and is attached to at least one of the piston and rod. A perimeter of a projection of the guide member onto a plane perpendicular to the longitudinal axis surrounds and is spaced apart from a perimeter of a projection of the MR piston onto the plane A damper 138 includes an MR piston assembly (110) and a tube (140). The piston assembly includes a piston (112), a rod (114), and a guide member (116). The guide member includes an MR fluid passageway (124) and is attached to at least one of the piston and rod. The guide member diameter is greater than the piston diameter. The tube surrounds and is radially spaced apart from the piston and surrounds the guide member, wherein the guide member makes sliding contact with the tube.

## Description

### TECHNICAL FIELD

The present invention relates generally to piston dampers, and more particularly to a magnetorheological (MR) piston assembly and to a magnetorheological (MR) damper.

### BACKGROUND OF THE INVENTION

Conventional piston dampers include MR dampers having a tube containing an MR fluid and having an MR piston assembly including a piston which slideably engages the tube and including a rod which has a first end attached to the piston and a second end extending outside the tube. The MR fluid passes through an orifice of the MR piston. Exposing the MR fluid in the orifice to a varying magnetic field, generated by providing a varying electric current to an electric coil of the MR piston, varies the damping effect of the MR fluid in the orifice providing variably-controlled damping of relative motion between the MR piston and the tube. The electric current is varied to accommodate varying operating conditions, as is known to those skilled in the art. The tube and the rod are attached to separate structures to dampen relative motion of the two structures along the direction of piston travel.

What is needed is an improved magnetorheological piston assembly and an improved magnetorheological damper.

### SUMMARY OF THE INVENTION

In a first expression of an embodiment of the invention, a magnetorheological (MR) piston assembly includes an MR piston, a rod, and a nonmagnetic guide member. The MR piston has a longitudinal axis and has an electric coil assembly. The rod has a first end portion attached to the MR piston. The guide member includes a valveless MR fluid passageway, wherein the guide member is in contact with the MR piston and the rod, wherein the guide member is attached to at least one of the MR piston and the rod, wherein a perimeter of a projection of the guide member onto a plane perpendicular to the longitudinal axis surrounds and is spaced apart from a perimeter of a projection of the MR piston onto the plane, and wherein the MR fluid passageway is adapted to pass MR fluid.

In a second expression of an embodiment of the invention, a magnetorheological (MR) damper includes an MR piston assembly and a tube. The MR piston assembly includes an MR piston, a rod, and a nonmagnetic guide member. The MR piston has a first diameter and has an electric coil assembly. The rod has a first end portion attached to the MR piston. The guide member includes a valveless MR fluid passageway, wherein the guide member is in contact with the MR piston and the rod, wherein the guide member is attached to at least one of the MR piston and the rod, wherein the guide member has a second diameter greater than the first diameter, and wherein the MR fluid passageway is adapted to pass MR fluid. The tube circumferentially surrounds and is radially spaced apart from the MR piston to define an unobstructed gap between the MR piston and the tube. The tube circumferentially surrounds the guide member, wherein the guide member makes sliding contact with the tube. The gap is in serial flow relationship with the MR fluid passageway.

In a third expression of an embodiment of the invention, a magnetorheological (MR) damper includes an MR piston assembly, a tube, and an MR fluid. The MR piston assembly includes an MR piston, a rod, and a nonmagnetic guide member. The MR piston has a first diameter and has an electric coil assembly. The rod has a first end portion attached to the MR piston. The guide member includes a valveless MR fluid passageway, wherein the guide member is in contact with the MR piston and the rod, wherein the guide member is attached to at least one of the MR piston and the rod, wherein the guide member has a second diameter greater than the first diameter, wherein the MR fluid passageway is adapted to pass MR fluid, and wherein the guide member is the only guide member attached anywhere to the at-least-one of the MR piston and the rod. The tube circumferentially surrounds and is radially spaced apart from the MR piston to define an unobstructed gap between the MR piston and the tube. The tube circumferentially surrounds the guide member, wherein the guide member makes sliding, and substantially-complete circumferential, contact with the tube. The gap is in serial flow relationship with the MR fluid passageway. The MR fluid is located inside the tube.

Several benefits and advantages are derived from one or more of the expressions of an embodiment of the invention. In one example, use of a shorter guide member for sliding contact instead of the conventional use of the longer MR piston for sliding contact should reduce friction forces at low MR piston velocity by eliminating the large sliding surface between the MR piston and the tube in conventional designs. In the same or a different example, having the MR fluid longitudinally pass the MR piston radially outward from the piston in the relatively large gap between the MR piston and the tube should eliminate the potential for iron particles, in an MR fluid containing iron particles, from accumulating, and causing unwanted increased friction, between the MR piston and the tube in conventional designs wherein the MR piston is in sliding contact with the tube.

### BRIEF DESCRIPTION OF THE DRAWINGS

Figure 1 is a longitudinal cross-sectional view of a first embodiment of a magnetorheological (MR) damper of the invention, including an MR piston assembly, showing the MR piston assembly with an electric coil assembly;
Figure 2 is a front elevational view of the guide member of Figure l;
Figure 3 is a longitudinal cross-sectional view of a second embodiment of an MR damper assembly (with the MR fluid and longitudinal axis removed for clarity), wherein the electric coil assembly includes three longitudinally-spaced-apart electric coils; and
Figure 4 is a longitudinal cross-sectional view of a third embodiment of an MR damper assembly (with the MR fluid and longitudinal axis removed for clarity), wherein the electric coil assembly includes a laminated multi-pole core and is shown before the electric coils are wound on the laminated multi-pole core.

### DESCRIPTION OF THE PREFERRED EMBODIMENT

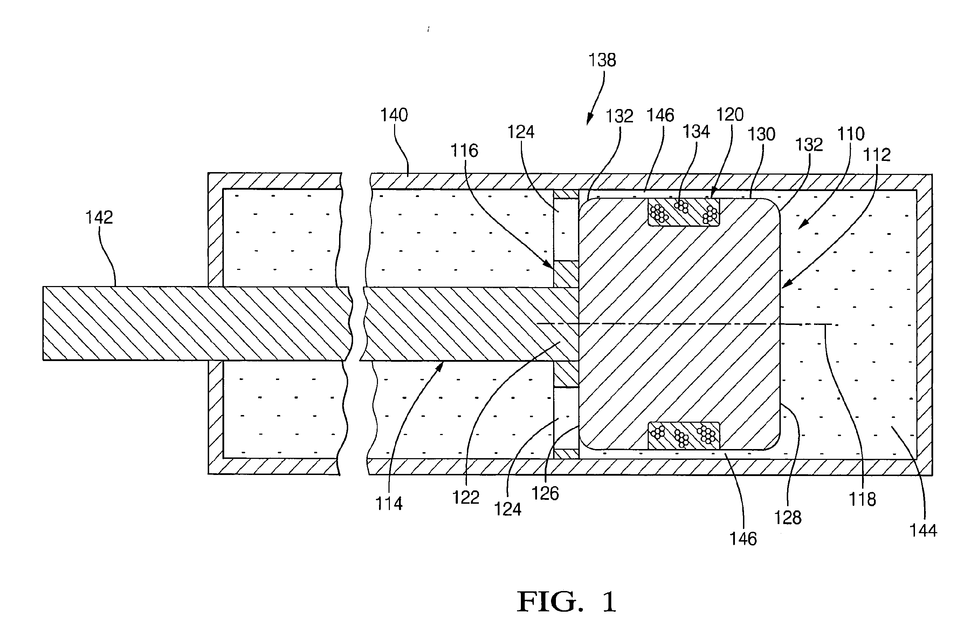

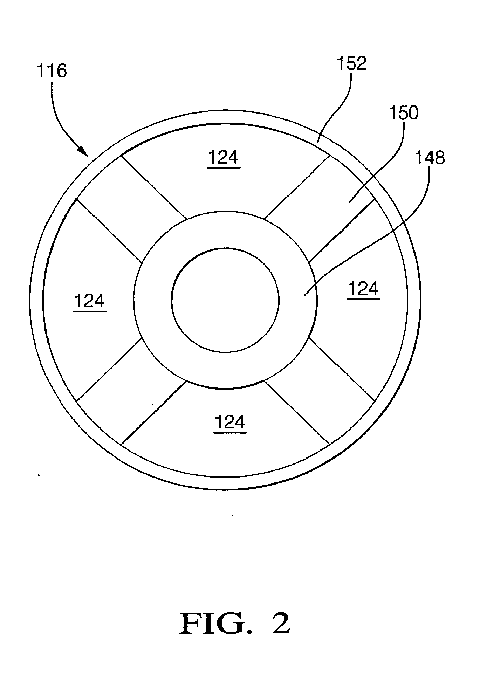

Referring now to the drawings, wherein like numerals represent like elements throughout, Figures 1 and 2 show a first embodiment of the present invention. A first expression of the embodiment of Figures 1-2 is for a magnetorheological (MR) piston assembly 110 including an MR piston 112, a rod 114, and a nonmagnetic guide member 116. The MR piston 112 has a longitudinal axis 118 and has an electric coil assembly 120. The rod 114 has a first end portion 122 attached to the MR piston 112. The guide member 116 includes a valveless MR fluid passageway 124 (four are shown in Figure 2). The guide member 116 is in contact with the MR piston 112 and the rod 114. The guide member 116 is attached to at least one of the MR piston 112 and the rod 114. A perimeter of a projection of the guide member 116 onto a plane perpendicular to the longitudinal axis 118 surrounds and is spaced apart from a perimeter of a projection of the MR piston 112 onto the plane. The MR fluid passageway 124 is adapted to pass MR fluid.

In one construction, not shown, of the first expression of the embodiment of Figures 1-2, the guide member 116 has a square outer boundary when viewed along the longitudinal axis 118 resulting in a projection, onto a plane perpendicular to the longitudinal axis 118, which has a square perimeter. In this construction, the MR piston 112 has a square outer boundary when viewed along the longitudinal axis 118 resulting in a projection, onto a plane perpendicular to the longitudinal axis 118, which has a square perimeter. The square perimeter of the guide member surrounds and is spaced apart from the square perimeter of the MR piston. Other non-circular constructions, including those wherein the perimeters of the guide member and the MR piston have different shapes, are left to the artisan.

In one enablement of the first expression of the embodiment of Figures 1-2, the MR piston 112 includes first and second longitudinal ends 126 and 128. The rod 114 is substantially coaxially aligned with the MR piston 112. The MR piston 112 has a first diameter (i.e., outer diameter), wherein the guide member 116 has a second diameter (i.e., outer diameter) greater than the first diameter as seen in Figure 1. The first and second diameters need not be constant along the longitudinal lengths of their respective MR piston and guide member. In one example, the guide member 116 longitudinally overlaps the rod 114 but not the MR piston 112. In one variation, the guide member 116 surrounds, and is in full circumferential contact with, the rod 114.

In one implementation of the first expression of the embodiment of Figures 1-2, the first end portion 122 of the rod 114 is attached at the first longitudinal end 126 of the MR piston 112. In another implementation, not shown, the first end portion 122 of the rod 114 extends through the MR piston 112 and is attached thereto at the second longitudinal end 128.

In one application of the first expression of the embodiment of Figures 1-2, the guide member 116 is attached to at least one of the MR piston 112 and the rod 114 proximate the first longitudinal end 126 of the MR piston 112. In one variation, the guide member 116 is attached to the first longitudinal end 126 of the MR piston 112 and/or is attached to the rod 114 proximate the first longitudinal end 126 of the MR piston 112. It is noted that the nonmagnetic guide member 116 is not part of the magnetic flux circuit produced by the electric coil assembly 120 as can be appreciated by those skilled in the art. In another application, not shown, the guide member 116 is attached to the MR piston 112 proximate the second longitudinal end 128.

In one arrangement of the first expression of the embodiment of Figures 1-2, the MR piston 112 includes an outer circumferential surface 130, wherein the outer circumferential surface 130 has substantially hydrodynamically-shaped surface portions 132 proximate the first and second longitudinal ends 126 and 128, and wherein the first diameter of the MR piston 112 is substantially constant between the substantially hydrodynamically-shaped surface portions 132. By "substantially hydrodynamically-shaped" is meant shaped to produce substantially laminar flow of MR fluid longitudinally past the outer circumferential surface 130 of the MR piston 112. It is noted that MR fluids comprise liquids and that a hydrodynamic shape in a liquid environment is generally equivalent to an aerodynamic shape in a gas (e.g., air) environment.

In one arrangement of the first expression of the embodiment of Figures 1-2, the guide member 116 is the only guide member attached anywhere to at least one of the MR piston 112 and the rod 114. In this arrangement, the longitudinal length of the guide member 116 is less than the longitudinal length of the MR piston 112. In one variation, the longitudinal length of the guide member 116 is less than twenty-five percent of the longitudinal length of the MR piston 112. In another variation, the longitudinal length of the guide member 116 is less than fifteen percent of the longitudinal length of the MR piston 112. In another arrangement, not shown, two guide members 116 (one at each longitudinal end of the MR piston) are employed whose total longitudinal length is less the longitudinal length of the MR piston 112. In one variation, the total longitudinal length is less than twenty-five percent, and in another variation is less than fifteen percent, of the longitudinal length of the MR piston 112.

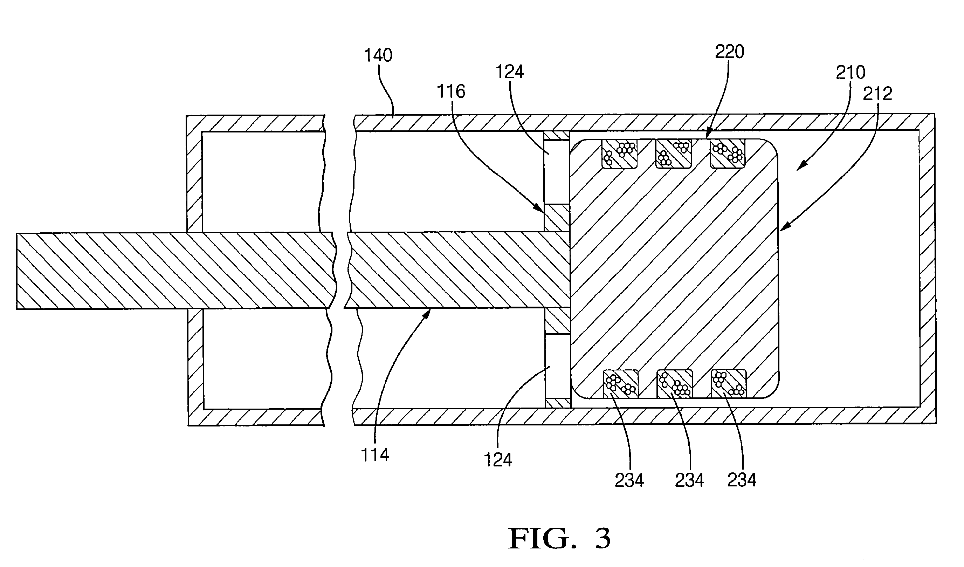

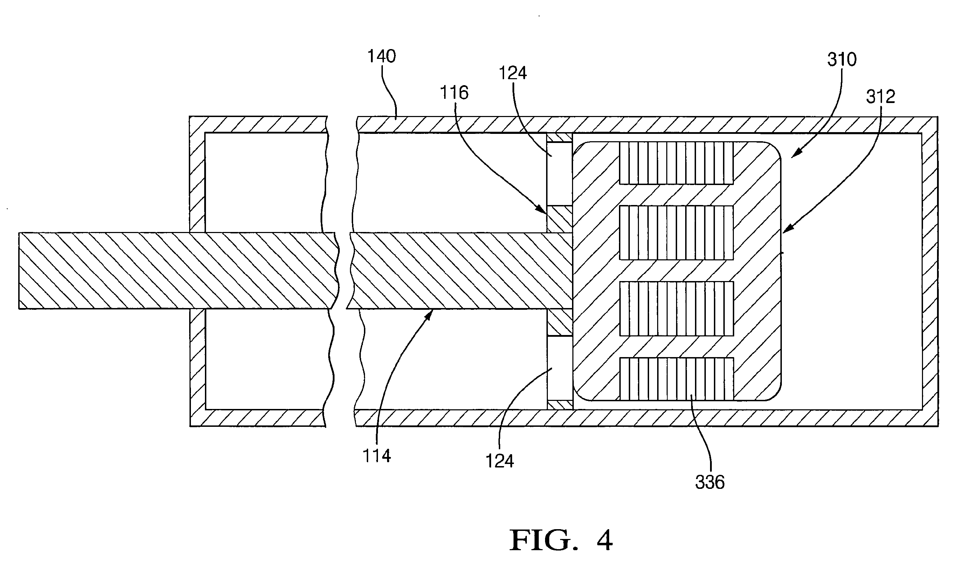

In one configuration of the first expression of the embodiment of Figures 1-2, the electric coil assembly 120 has only one electric coil 134. In a second embodiment of an MR piston assembly 210 shown in Figure 3, the electric coil assembly 220 has a plurality of longitudinally-spaced-apart electric coils 234 (three coaxially aligned coils are shown). In a third embodiment of an MR piston assembly 310 shown in Figure 4, the MR piston 312 includes a laminated multi-pole piston core 336. In one variation, the laminated multi-pole piston core 336 is as described in U.S. Patent No. 6,481,546.

A second expression of the embodiment of Figures 1-2 is for a magnetorheological (MR) damper 138 including an MR piston assembly 110 and a tube 140. The MR piston assembly 110 includes an MR piston 112, a rod 114, and a nonmagnetic guide member 116. The MR piston 112 has a first diameter and has an electric coil assembly 120. The rod 114 has a first end portion 122 attached to the MR piston 112. The guide member 116 includes a valveless MR fluid passageway 124. The guide member 116 is in contact with the MR piston 112 and the rod 114. The guide member 116 is attached to at least one of the MR piston 112 and the rod 114. The guide member 116 has a second diameter greater than the first diameter. The MR fluid passageway 124 is adapted to pass MR fluid. The tube 140 circumferentially surrounds and is radially spaced apart from the MR piston 112 to define an unobstructed gap 146 between the MR piston 112 and the tube 140. The tube 140 circumferentially surrounds the guide member 116, wherein the guide member 116 makes sliding contact with the tube 140. The gap 146 is in serial flow relationship with the MR fluid passageway 124. It is noted that by "unobstructed" is meant that the gap 146 is devoid of any obstructing component (such as a valve, a seal, a guide member, etc.) disposed between the MR piston 112 and the tube 140.

In one illustration of the second expression of the embodiment of Figures 1-2, the MR fluid passageway (i.e., through passageway) 124 is adapted to pass MR fluid through the guide member 116 to and from a region which is located longitudinally proximate the first longitudinal end 126 of the MR piston 112 and radially between the outer circumferential surface 130 of the MR piston 112 and the inner surface of the tube 140. Figure 2 shows the guide member 116 with four MR fluid passageways 124 in a guide member 116 design having a central hub 148, four spokes 150, and an outer ring 152. Other designs for the guide member, including the number of MR fluid passageways, are left to the artisan.

In one enablement of the second expression of the embodiment of Figures 1-2, the MR piston 112 includes a longitudinal axis 118 and first and second longitudinal ends 126 and 128. In one variation, the rod 114 is substantially coaxially aligned with the MR piston 112. In one modification, the rod 114 has a second end portion 142 longitudinally extending outside the tube 140. It is noted that the previously described constructions, implementations, arrangements, etc. of the first expression of the embodiment of Figures 1-2 (and the embodiments of Figures 3-4) are equally applicable to the second expression of the embodiment of Figures 1-2.

In one deployment of the second expression of the embodiment of Figures 1-2, the MR damper 138 is used as a shock absorber for an automobile, an airplane, or other type of vehicle. In another deployment, the MR damper 138 is used to provide motion resistance on exercise equipment such as stair climbers and rowing machines. In a further deployment, the MR damper 138 is used to provide motion isolation for a building, bridge, or other structure subject to earthquakes. In an additional deployment, the MR damper 138 is used dampen vibrations encountered by vehicles and structures in outer space. Other deployments are left to the artisan.

A third expression of the embodiment of Figures 1-2 is for a magnetorheological (MR) damper 138 including an MR piston assembly 110, a tube 140, and an MR fluid 144. The MR piston assembly 110 includes an MR piston 112, a rod 114, and a nonmagnetic guide member 116. The MR piston 112 has a first diameter and has an electric coil assembly 120. The rod 114 has a first end portion 122 attached to the MR piston 112. The guide member 116 includes a valveless MR fluid passageway 124. The guide member 116 is in contact with the MR piston 112 and the rod 114. The guide member 116 is attached to at least one of the MR piston 112 and the rod 114. The guide member 116 has a second diameter greater than the first diameter. The MR fluid passageway 124 is adapted to pass MR fluid. The guide member 116 is the only guide member attached anywhere to at least one of the MR piston 112 and the rod 114. The tube 140 circumferentially surrounds and is radially spaced apart from the MR piston 112 to define an unobstructed gap 146 between the MR piston and the tube 140. The tube 140 circumferentially surrounds the guide member 116, wherein the guide member 116 makes sliding, and substantially-complete circumferential, contact with the tube 140. The gap 146 is in serial flow relationship with the MR fluid passageway 124. The MR fluid 144 is disposed inside the tube 140.

It is noted that the previously described constructions, implementations, arrangements, etc. of the first expression of the embodiment of Figures 1-2 (and the embodiments of Figures 3-4) are equally applicable to the third expression of the embodiment of Figures 1-2. Likewise, it is noted that the previously described enablements, deployments, etc. of the second expression of the embodiment of Figures 1-2 are equally applicable to the third expression of the embodiment of Figures 1-2. In one illustration, the MR fluid 144 disposed inside the tube 140 includes MR fluid 144 disposed in the gap 146 and in the MR fluid passageway 124, and the electric coil assembly 120 magnetically influences the MR fluid 144 in the gap 146 but essentially does not magnetically influence the MR fluid 144 in the MR fluid passageway 124.

Referring to Figures 1-2, in operation, when the MR piston 112 is moved in compression relative to the tube 140, MR fluid 144 enters the gap 146 between the outer circumferential surface 130 of the MR piston 112 and the inner surface of the tube 140 and then flows through the MR fluid passageway or passageways 124 of the guide member 116. When the MR piston 112 is moved in extension relative to the tube 140, MR fluid 144 enters the MR fluid passageway or passageways 124 of the guide member 116 and then flows into the gap 146. In one choice of materials for the tube 140, the tube 140 consists essentially of steel to allow the tube 140 to be able to complete the magnetic flux circuit generated by the electric coil assembly 120 of the MR piston 112, as can be appreciated by those skilled in the art. Other choices of materials, including materials for the nonmagnetic guide member 116, are left to the artisan.

Potential benefits and advantages, as can be appreciated by those skilled in the art, of one or more of the previously described embodiments, and constructions, implementations, arrangements, etc. thereof, include one or more of the following:
1. Significantly reducing friction forces at low piston velocity by eliminating the large sliding surface between the piston and the tube found in conventional designs;
2. Eliminating the potential for iron particle accumulation (for MR fluids containing iron particles) between the piston and the tube found in conventional designs;
3. Eliminating the potential for damaging the spherical iron particles (for MR fluids containing spherical iron particles) by minimizing the potential rubbing between the sliding contact surfaces found in conventional designs;
4. Minimizing friction forces induced by the effect by the effect of residual magnetic flux in the gap by introducing a laminated piston core compared to conventional designs;
5. Reduced off-state damping force and higher turn-up ratios (ratio of on-state damping force to off-state damping force) compared to conventional designs;
6. Reduced damping force variations with MR fluid temperatures compared to conventional designs;
7. Significantly reducing flow losses, by employing hydrodynamically-shaped surface portions of the piston proximate the longitudinal ends of the piston, compared to conventional designs;
8. No increase in magnetic hysteresis due to stress induced by thermal expansion (which reduces the residual magnetism build up as the damper gets hot) since the piston no longer slides on any part of the magnetic flux circuit as found in conventional designs;
9. Short piston length when using a piston with a laminated multi-pole core which reduces temperature effects on the damping force and achieves a higher turn up ratio;
10. Faster damper transient response compared to conventional designs; and
11. Low residual magnetic flux density at the gap which achieves lower stiction (friction and residual magnetic flux) force and which achieves a higher turn up ratio compared to conventional designs.

The foregoing description of several expressions and embodiments of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A magnetorheological (MR) piston assembly (110) comprising:
a) an MR piston (112) having a longitudinal axis (118) and having an electric coil assembly (120);
b) a rod (114) having a first end portion (122) attached to the MR piston; and
c) a nonmagnetic guide member (116) including a valveless MR fluid passageway (124), wherein the guide member is in contact with the MR piston and the rod, wherein the guide member is attached to at least one of the MR piston and the rod, wherein a perimeter of a projection of the guide member onto a plane perpendicular to the longitudinal axis surrounds and is spaced apart from a perimeter of a projection of the MR piston onto the plane, and wherein the MR fluid passageway is adapted to pass MR fluid.

2. The MR piston assembly of claim 1, wherein the MR piston includes first and second longitudinal ends (126 and 128), wherein the rod is substantially coaxially aligned with the MR piston, wherein the MR piston has a first diameter, and wherein the guide member has a second diameter greater than the first diameter.

3. The MR piston assembly of claim 2, wherein the MR piston includes an outer circumferential surface (130), wherein the outer circumferential surface has substantially hydrodynamically-shaped surface portions (132) proximate the first and second longitudinal ends, and wherein the first diameter is substantially constant between the substantially hydrodynamically-shaped surface portions.

4. The MR piston assembly of claim 2, wherein the guide member is attached to the at-least-one of the MR piston and the rod proximate the first longitudinal end.

5. The MR piston assembly of claim 4, wherein the guide member is the only guide member attached anywhere to at least one of the MR piston and the rod.

6. The MR piston assembly of claim 2, wherein the electric coil assembly (220) includes a plurality of longitudinally-spaced-apart electric coils (234).

7. The MR piston assembly of claim 2, wherein the MR piston (312) includes a laminated multi-pole piston core (336).

8. A magnetorheological (MR) damper (138) comprising:
a) an MR piston assembly (110) including:
(1) an MR piston (112) having a first diameter and having an electric coil assembly (120);
(2) a rod (114) having a first end portion (122) attached to the MR piston; and
(3) a nonmagnetic guide member (116) including a valveless MR fluid passageway (124), wherein the guide member is in contact with the MR piston and the rod, wherein the guide member is attached to at least one of the MR piston and the rod, wherein the guide member has a second diameter greater than the first diameter, and wherein the MR fluid passageway is adapted to pass MR fluid; and
b) a tube (140) which circumferentially surrounds and is radially spaced apart from the MR piston to define an unobstructed gap between the MR piston and the tube and which circumferentially surrounds the guide member, wherein the guide member makes sliding contact with the tube, and wherein the gap is in serial flow relationship with the MR fluid passageway.

9. The MR damper of claim 8, wherein the MR piston includes a longitudinal axis (118) and first and second longitudinal ends (126 and 128), and wherein the rod is substantially coaxially aligned with the MR piston and has a second end portion (142) longitudinally extending outside the tube.

10. The MR damper of claim 9, wherein the MR piston includes an outer circumferential surface (130), wherein the outer circumferential surface has substantially hydrodynamically-shaped surface portions (132) proximate the first and second longitudinal ends, and wherein the first diameter is substantially constant between the substantially hydrodynamically-shaped surface portions.

11. The MR damper of claim 9, wherein the guide member is attached to the at-least-one of the MR piston and the rod proximate the first longitudinal end.

12. The MR damper of claim 11, wherein the guide member is the only guide member attached anywhere to at least one of the MR piston and the rod.

13. The MR damper of claim 9, wherein the electric coil assembly (220) includes a plurality of longitudinally-spaced-apart electric coils (234).

14. The MR damper of claim 9, wherein the MR piston (312) includes a laminated multi-pole piston core (336).

15. A magnetorheological (MR) damper (138) comprising:
a) an MR piston assembly (110) including:
(1) an MR piston (112) having a first diameter and having an electric coil assembly (120);
(2) a rod (114) having a first end portion (122) attached to the MR piston; and
(3) a nonmagnetic guide member (116) including a valveless MR fluid passageway (124), wherein the guide member is in contact with the MR piston and the rod, wherein the guide member is attached to at least one of the MR piston and the rod, wherein the guide member has a second diameter greater than the first diameter, wherein the MR fluid passageway is adapted to pass MR fluid, and wherein the guide member is the only guide member attached anywhere to at least one of the MR piston and the rod;
b) a tube (140) which circumferentially surrounds and is radially spaced apart from the MR piston to define an unobstructed gap between the MR piston and the tube and which circumferentially surrounds the guide member, wherein the guide member makes sliding, and substantially-complete circumferential, contact with the tube, and wherein the gap is in serial flow relationship with the MR fluid passageway; and
c) an MR fluid (144) disposed inside the tube.

16. The MR damper of claim 15, wherein the MR piston includes a longitudinal axis (118) and first and second longitudinal ends (126 and 128), and wherein the rod is substantially coaxially aligned with the MR piston and has a second end portion (142)longitudinally extending outside the tube.

17. The MR damper of claim 16, wherein the MR piston includes an outer circumferential surface (130), wherein the outer circumferential surface has substantially hydrodynamically-shaped surface portions (132)proximate the first and second longitudinal ends, and wherein the first diameter is substantially constant between the substantially hydrodynamically-shaped surface portions.

18. The MR damper of claim 16, wherein the guide member is attached to the at-least-one of the MR piston and the rod proximate the first longitudinal end.

19. The MR damper of claim 16, wherein the electric coil assembly (220) includes a plurality of longitudinally-spaced-apart electric coils (234).

20. The MR damper of claim 16, wherein the MR piston (312) includes a laminated multi-pole piston core (336).
